# EUROPÄISCHE PATENTSCHRIFT

(11) **EP 3 330 568 B1**
(45) Veröffentlichungstag und Bekanntmachung des Hinweises auf die Patenterteilung: **17.07.2019**
(21) Anmeldenummer: 17201493.8
(22) Anmeldetag: 14.11.2017
(51) Int. Cl.: F16F 9/58, F15B 15/24, F16F 9/02

(54) **KOLBEN-ZYLINDER AGGREGAT**
PISTON-CYLINDER DEVICE
ENDEMBLE CYLINDRE-PISTON

(30) Priorität: 05.12.2016 DE 102016123460
(43) Veröffentlichungstag der Anmeldung: 06.06.2018
(73) Patentinhaber: Stabilus GmbH, 56070 Koblenz (DE)
(72) Erfinder: Löhken, Lars, 53229 Bonn (DE); Probst, Ulrich, 56204 Hillscheid (DE); Piroth, Raphael, 56077 Koblenz (DE); Müller, Markus, 56072 Koblenz (DE)
(74) Vertreter: Klein, Thomas

(56) Entgegenhaltungen:
- DE-A1- 4 242 601
- US-A- 2 614 536

## Beschreibung

Die Erfindung ist im Hauptanspruch definiert und bezieht sich auf ein Kolben-Zylinder Aggregat mit einem Zylinder, der mit einem *unter Druck stehenden* Gas gefüllt und dessen Zylinderinnenraum von einem axial in dem Zylinder verschiebbaren Kolben in einen ersten Arbeitsraum und einen zweiten Arbeitsraum unterteilt ist, mit einer am Kolben angeordneten Kolbenstange, die durch den zweiten Arbeitsraum hindurch und durch einen stirnseitigen zweiten Verschluß an dem zweiten Ende des Zylinders abgedichtet nach außen geführt ist, wobei der Einfahrhub von Kolben und Kolbenstange durch einen im Zylinder angeordneten Anschlag begrenzt ist, an den der Kolben direkt oder indirekt zur Anlage gelangt, wobei die axiale Position des Anschlags im Zylinder mittels einer Verstelleinrichtung variierbar einstellbar ist, und *wobei der Anschlag ein abgedichtet in dem Zylinder verschiebbar angeordneter Anschlagkolben ist, der den ersten Arbeitsraum von einem Anschlagraum zwischen dem Anschlagkolben und einem stirnseitigen ersten Verschluß am ersten Ende des Zylinders trennt.*

Bei derartigen Kolben-Zylinder Aggregaten sind nur die eingeschobene Endposition und die ausgeschobene Endposition nicht aber eine Zwischenposition reproduzierbare Positionen. Blockierbare Kolben-Zylinder Aggregate können zwar auch in einer Zwischenposition zwischen der eingeschobenen Endposition und der ausgeschobenen Endposition positioniert werden, diese Zwischenposition ist aber nicht reproduzierbar.

*Aus der* DE 42 42 601 A1 *ist ein Kolben-Zylinder-Aggregat der o.g. Art bekannt. An dem der Kolbenstange gegenüberliegenden Verschluß des Zylinders ist eine Gewindestange angeordnet, die koaxial in den Zylinder hineinragt und in eine koaxiale Gewindebohrung des Anschlagkolbens eingeschraubt ist. Die Gewindestange ist abgedichtet aus dem Zylinder herausgeführt und an ihrem aus dem Zylinder ragenden Ende zur axialen Verstellung des Anschlagkolbens manuell verdrehbar.*

*Aus der* US 2 614 536 A *ist ein Kolben-Zylinder-Aggregat mit einem Zylinder bekannt, der mit einem hydraulischen Fluid gefüllt und dessen Zylinderinnenraum von einem axial in dem Zylinder verschiebbaren Kolben in einen ersten Arbeitsraum und einen zweiten Arbeitsraum unterteilt ist. Mit einer am Kolben angeordneten Kolbenstange, die durch den zweiten Arbeitsraum hindurch und durch einen stirnseitigen zweiten Verschluß an dem zweiten Ende des Zylinders abgedichtet nach außen geführt ist. Dabei ist der Einfahrhub von Kolben und Kolbenstange durch einen im Zylinder angeordneten Anschlag begrenzt, an den der Kolben direkt oder indirekt zur Anlage gelangt, wobei die axiale Position des Anschlags im Zylinder mittels einer Verstelleinrichtung variierbar einstellbar ist*

Aufgabe der Erfindung ist es ein Kolben-Zylinder Aggregat der eingangs genannten Art zu schaffen, das bei einfachem Aufbau außer in der eingeschobenen Endposition und der ausgeschobenen Endposition auch in einer beliebigen Zwischenposition zwischen der eingeschobenen Endposition und der ausgeschobenen Endposition reproduzierbar positionierbar ist.

Diese Aufgabe wird erfindungsgemäß dadurch gelöst, daß die Ventileinrichtung von der *Betätigungseinrichtung aus einer Schließposition in eine den ersten Arbeitsraum mit dem Anschlagraum verbindende Offenposition verstellbar und in der Offenposition der Ventileinrichtung der Anschlagkolben dem Kolben nachführbar ist.*

Bei dieser Ausbildung ist die axiale Position des Anschlags auf die gewünschte Zwischenposition einstellbar, so daß der Maximalhub des Kolbens und der Kolbenstange durch das Anschlagen des Kolbens an dem Anschlag begrenzt wird. Die Verstellbarkeit des Anschlags *mit einem die Funktion einer Gasfeder erfüllenden Kolben-Zylinder Aggregat* ermöglicht es die axiale Position des Anschlags zu variieren.

Der Anschlagkolben kann mit dem Kolben koppelbar sein.

Dazu bestehen Möglichkeiten einfacher Ausbildung darin, daß der Anschlagkolben von einer vorgespannten Feder zum Kolben hin beaufschlagt ist oder daß an dem Anschlagkolben ein Magnet angeordnet ist, durch den bei an dem Anschlagkolben anliegenden Kolben der aus einem ferromagnetischen Werkstoff bestehende oder ein ferromagnetisches Teil aufweisende Kolben durch das Magnetfeld des Magnets mit dem Anschlagkolben kraftschlüssig gekoppelt ist.

Dabei weist die Ventileinrichtung vorzugsweise ein von der Betätigungseinrichtung axial bewegbares Schließglied auf, wobei die Ventileinrichtung ein Schieberventil mit einem Ventilschieber oder ein Sitzventil mit einem Sitzschließglied sein kann, bei dem der Ventilschieber oder das Sitzschließglied von der Betätigungseinrichtung aus der Schließposition in die Offenposition bewegbar ist.

Dies ermöglicht eine einfach ausgebildete und damit weitgehend defektunanfällige Ausbildung der Ventileinrichtung.

Eine einfach ausgebildete Möglichkeit zum Öffnen der Ventileinrichtung besteht dabei darin, daß der Ventilschieber oder das Sitzschließglied mittels einer axial von außen in das Innere des Zylinders ragenden Betätigungsstange aus der Schließposition in die Offenposition bewegbar ist. Dabei ist es Bauraum sparend, wenn die Kolbenstange eine durchgehende Axialbohrung aufweist, in der die an ihrem äußeren Ende mit einer Betätigungskraft beaufschlagbare Betätigungsstange abgedichtet axial bewegbar geführt ist.

Die Betätigungsstange kann durch einen Aktuator oder manuell an ihrem äußeren Ende mit einer Betätigungskraft beaufschlagbar sein.

Eine vorteilhafte Möglichkeit zur Betätigung der Ventileinrichtung besteht darin, daß der Kolben eine in den ersten Arbeitsraum hineinragende Fortsatzstange mit durchgehender koaxialer Durchgangsbohrung aufweist, die von einer teleskopisch dazu verschiebbaren Teleskophülse umschlossen ist, wobei die Teleskophülse mit der Fortsatzstange kraftschlüssig koppelbar ist, wodurch durch das dem Anschlagkolben zugewandte Ende der Teleskophülse der Ventilschieber oder das Sitzschließglied der Ventileinrichtung in dessen Öffnungsrichtung bewegbar beaufschlagbar ist.

Zur einfachen kraftschlüssigen Kopplung kann das freie Ende der aus der Fortsatzstange in das Innere der Teleskophülse ragenden Betätigungsstange ein Spreizelement aufweisen, das in eine zentrische Öffnung eines ringartigen Reibelements ragt, wobei bei Betätigung der Betätigungsstange durch die Betätigungseinrichtung das Reibelement radial erweiterbar und gegen die Innenwand der Teleskophülse preßbar ist.

Eine andere, ebenfalls vorteilhafte Möglichkeit zur Betätigung der Ventileinrichtung besteht darin, daß die Ventileinrichtung eine elektromagnetisch oder elektromechanisch betätigbare Ventileinrichtung ist.

Ein defektunanfälliger Aufbau kann dadurch erreicht werden, daß die den Anschlagkolben beaufschlagende vorgespannte Feder eine Schraubendruckfeder ist, die mit ihrem einen Ende an dem stirnseitigen ersten Verschluß am ersten Ende des Zylinders und mit ihrem anderen Ende an dem Anschlagkolben abgestützt ist.

Ausführungsbeispiele der Erfindung sind in der Zeichnung dargestellt und werden im Folgenden näher beschrieben. Es zeigen
- Figur 1: einen Längsschnitt eines ersten Ausführungsbeispiels eines Kolben-Zylinder Aggregats
- Figur 1a: einen vergrößerten Ausschnitt des Kolben-Zylinder Aggregats nach Figur 1
- Figur 2: einen Längsschnitt eines zweiten Ausführungsbeispiels eines Kolben-Zylinder Aggregats
- Figur 2a: einen vergrößerten Ausschnitt des Kolben-Zylinder Aggregats nach Figur 2
- Figur 3: einen Längsschnitt eines dritten Ausführungsbeispiels eines Kolben-Zylinder Aggregats
- Figur 4: einen Längsschnitt eines vierten Ausführungsbeispiels eines Kolben-Zylinder Aggregats
- Figur 4a: einen vergrößerten Ausschnitt des Kolben-Zylinder Aggregats nach Figur 4
- Figur 5: einen Längsschnitt eines fünften Ausführungsbeispiels eines Kolben-Zylinder Aggregats
- Figur 5a: einen vergrößerten Ausschnitt des Kolben-Zylinder Aggregats nach Figur 5.

Die in den Figuren dargestellten Kolben-Zylinder Aggregate weisen einen an seinen Enden durch einen ersten Verschluß 14 und einen zweiten Verschluß 15 verschlossenen Zylinder 1 auf, in dem ein Kolben 2 axial verschiebbar angeordnet ist. Der Kolben 2 trennt den mit einem Fluid gefüllten Innenraum des Zylinders 1 in einen ersten Arbeitsraum 3 und einen zweiten Arbeitsraum 4.

An dem Kolben 2 ist einseitig eine Kolbenstange 5 angeordnet, die sich koaxial durch den zweiten Arbeitsraum 4 erstreckt und durch eine Führungs- und Dichteinheit 6 und den zweiten Verschluß 15 nach außen geführt ist.

Die Kolbenstange 5 weist eine durchgehende Axialbohrung 7 auf, in der eine Betätigungsstange 8 axial verschiebbar geführt ist. An dem außen aus der Kolbenstange 5 ragenden Ende der Betätigungsstange 8 ist eine Betätigungseinrichtung 9 angeordnet, mittels der die Betätigungsstange 8 direkt oder indirekt axial bewegbar antreibbar ist.

In dem der Kolbenstange 5 entgegengesetzten Endbereich der ersten Arbeitskammer 3 ist ein Anschlagkolben 10 im Zylinder 1 axial verschiebbar angeordnet, der den ersten Arbeitsraum 3 von einem Anschlagraum 13 zwischen dem ersten Arbeitsraum 3 und dem ersten Verschluß 14 des Zylinders 1 trennt. Durch den Anschlagkolben 10 ist der Einschubhub von Kolben 2 und Kolbenstange 5 begrenzbar, indem der Kolben 2 oder ein mit dem Kolben 2 verbundenes Bauteil am Anschlagkolben 10 zur Anlage gelangt.

Im Anschlagkolben 10 ist ein Schieberventil 11 angeordnet, das einen in einer Koaxialbohrung im Anschlagkolben 10 axial verschiebbaren Ventilschieber 12 aufweist, der in seiner unbetätigten Stellung eine Verbindung von dem ersten Arbeitsraum 3 mit dem Anschlagraum 13 sperrt und damit den Anschlagkolben 10 in seiner eingenommen Stellung fixiert.

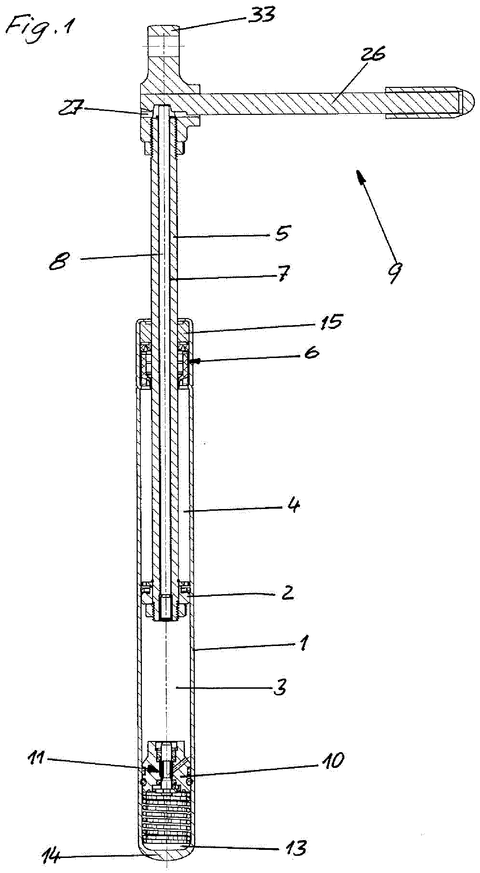

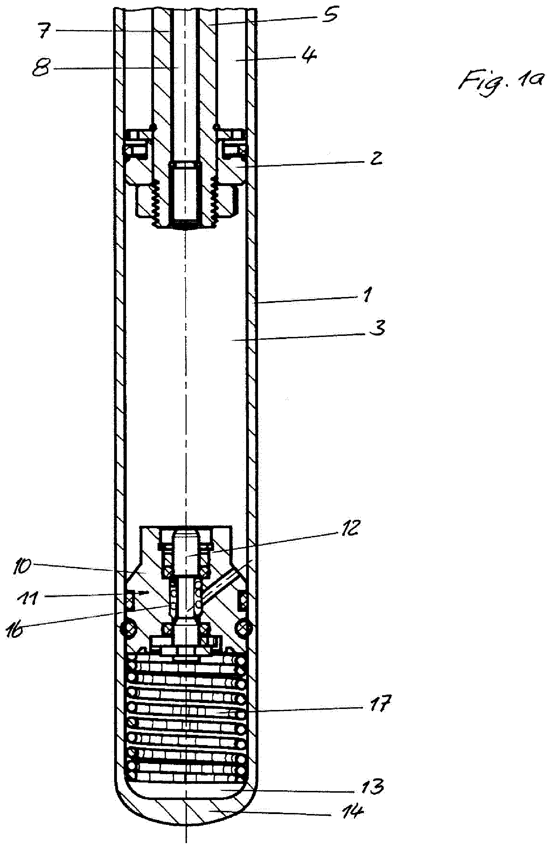

Zum Öffnen des Schieberventils 11 fährt in den Figuren 1 bis 4a die Kolbenstange 5 mit dem Kolben 2 bis zur Anlage des Kolbens 2 an den Anschlagkolben 10. Nun wird durch die Betätigungseinrichtung 9 die Betätigungsstange 8 zum Anschlagkolben 10 hin verschoben, wobei das in den Zylinder 1 ragende freie Ende der Betätigungsstange 8 stirnseitig an dem Ventilschieber 12 zur Anlage kommt und bei weiterer Verschiebung diesen entgegen der Kraft einer Feder 16 zum Anschlagraum 13 hin verschiebt.

Durch das geöffnete Schieberventil 11 ist die Fixierung des Anschlagkolbens 10 gelöst und Fluid kann aus dem Anschlagraum 13 in den ersten Arbeitsraum 3 und umgekehrt strömen.

Durch weiteres Einfahren der Kolbenstange 5 wird der Anschlagkolben 13 vom Kolben 2 zum ersten Verschluß 14 hin verschoben. Damit wird ein größerer Hub bis zur Endposition des Hubes erreicht.

Um einen geringeren Hub zu erreichen ist in den Figuren 1 und 1a der Anschlagkolben 10 von einer in dem Anschlagraum 13 angeordneten, mit ihrem einen Ende an dem ersten Verschluß 14 abgestützten vorgespannten Schraubendruckfeder 17 beaufschlagt. Wird nun bei geöffnetem Schieberventil 11 die Kolbenstange 5 mit dem Kolben 2 in Ausfahrrichtung bewegt, so folgt durch die Beaufschlagung durch die Schraubendruckfeder 17 der Anschlagkolben 10 dem Kolben 2. In der nun gewünschten neuen Endposition des Anschlagkolbens 10 wird durch die Betätigungseinrichtung 9 die Betätigungsstange 8 wieder in die Axialbohrung 7 der Kolbenstange 5 eingefahren, wodurch der Ventilschieber 12 durch seine Beaufschlagung von der Feder 16 sich wieder in seine Endposition bewegt und die Verbindung zwischen dem Anschlagraum 13 und dem ersten Arbeitsraum 3 geschlossen wird. Damit ist der Anschlagkolben 10 wieder fixiert.

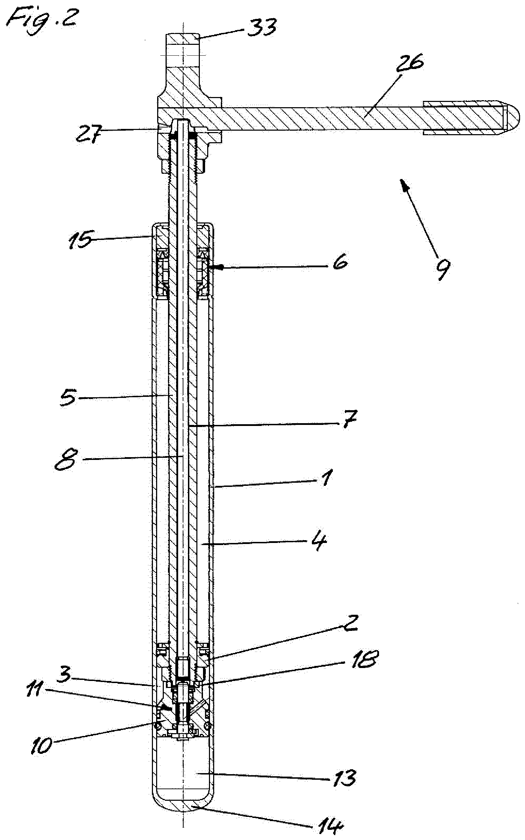

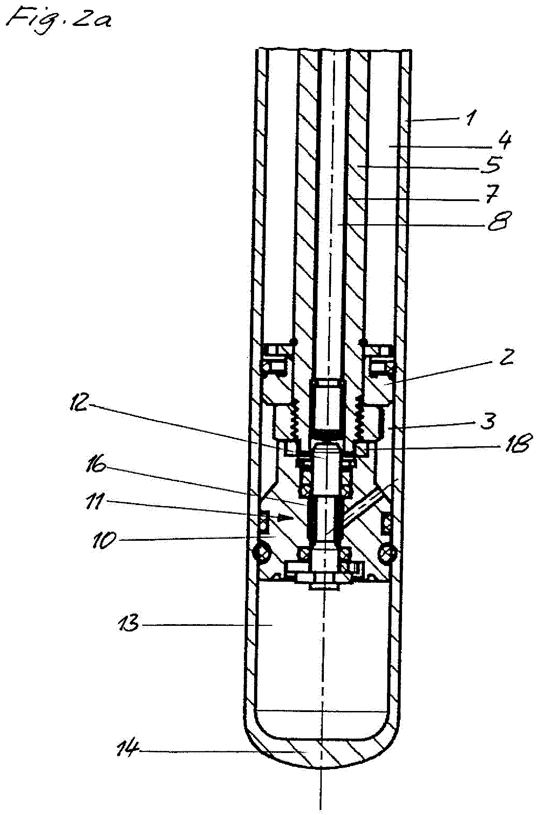

Bei dem Ausführungsbeispiel der Figuren 2 und 2a ist der Aufbau und die Funktion die gleiche wie bei dem Ausführungsbeispiel den Figuren 1 und 1a außer, daß keine Schraubendruckfeder 17 dafür aber ein als Magnetring 18 ausgebildeter Magnet am Anschlagkolben 10 vorhanden ist. Ist der aus einem ferromagnetischen Werkstoff bestehende Kolben 2 an den Anschlagkolben 10 heranbewegt, so wird durch das Magnetfeld des Magnetrings 18 der Anschlagkolben 10 an den Kolben 2 gekoppelt.

Bei Öffnung des Schieberventils 11 auf die zu den Figuren 1 und 1a beschriebene Art kann nun die Kolbenstange 5 mit dem Kolben 2 und dem daran gekoppelten Anschlagkolben 10 in den Anschlagraum 13 oder in den ersten Arbeitsraum 3 verschoben werden, um dann in der neuen Endposition durch Schließen des Schieberventils 11 wieder fixiert zu werden.

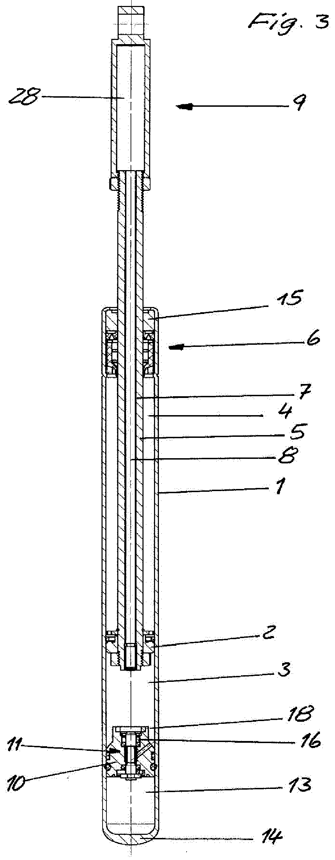

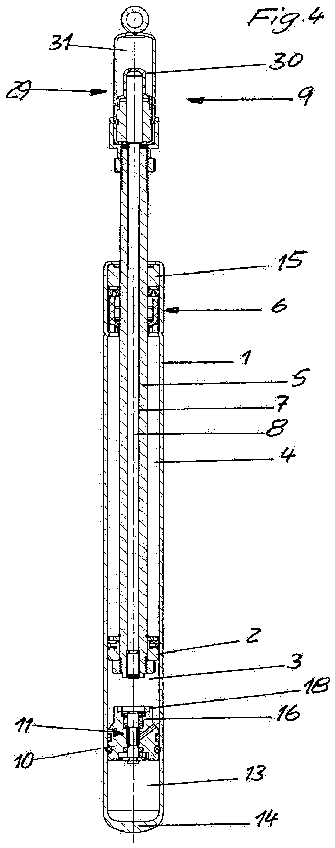

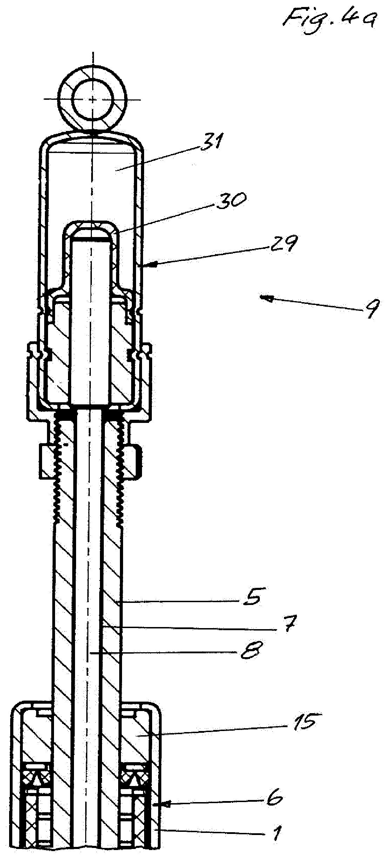

Der Aufbau des Anschlagkolbens 10 mit Schieberventil 11 und deren Betätigung durch die Betätigungsstange 8 der Ausführungsbeispiele der Figuren 3 und 4 entsprechen dem Ausführungsbeispiel der Figuren 2 und 2a.

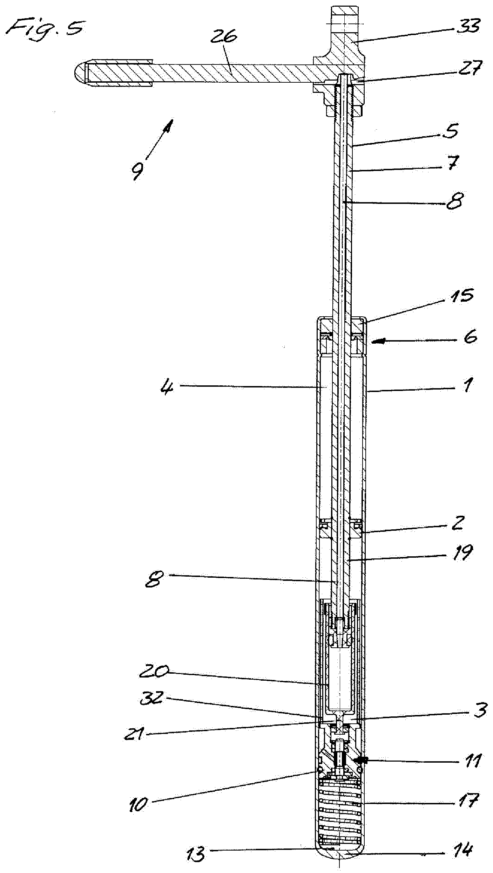

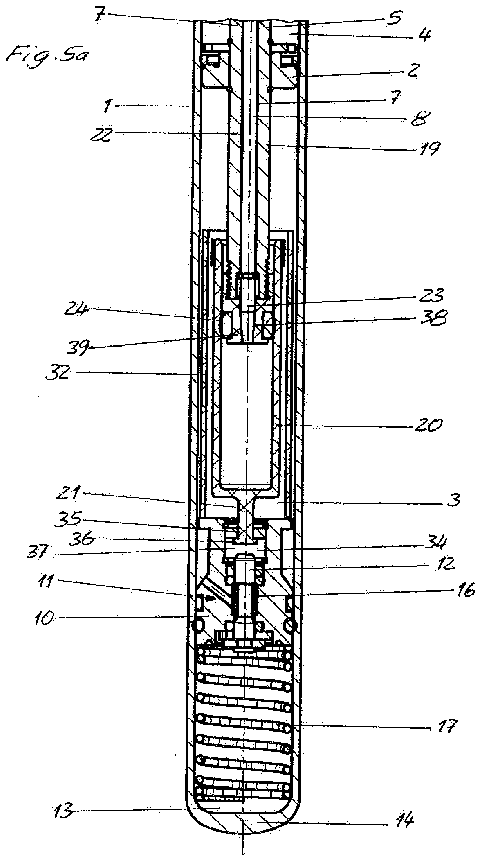

Bei dem Ausführungsbeispiel der Figuren 5 und 5a entspricht der Aufbau des durch die Schraubendruckfeder 17 beaufschlagten Anschlagkolbens 10 mit Schieberventil 11 und deren Funktion dem Aufbau und der Funktion des Ausführungsbeispiels der Figuren 1 und 1a.

Der Kolben 2 besitzt eine in den ersten Arbeitsraum 3 hineinragende Fortsatzstange 19 mit durchgehender koaxialer Durchgangsbohrung 22, die von einer sich teleskopisch dazu verschiebbaren Teleskophülse 20 umschlossen ist. Das dem Anschlagkolben 10 zugewandte und über das freie Ende der Fortsatzstange 19 hinausragende Ende der Teleskophülse 20 besitzt einen zum Anschlagkolben 10 hin hervorstehenden koaxialen Betätigungszapfen 21. Der Betätigungszapfen 21 ragt durch eine koaxiale Zapfenöffnung 35 in eine zum ersten Arbeitsraum 3 offene Kammer 34 hinein. An seinem freien Ende weist der Betätigungszapfen 21 eine radiale Erweiterung 36 größerer radialer Erstreckung, als der Zapfenöffnung 35 auf, so daß der Betätigungszapfen 21 um eine axiale Lose 37 bewegbar an dem Anschlagkolben 10 angeordnet ist.

An dem aus der Fortsatzstange 19 herausragenden freien Ende der Betätigungsstange 8 ist ein axial konisches Spreizelement 23 angeordnet, das in eine entsprechend axial Konusausnehmung 38 eines radial elastisch verformbaren und mit dem Kolben 2 verbundenen Trägerrings 39 hineinragt. Der Trägerring 39 ist wiederum von einem ringartigen Reibelement 24 umschlossen. Bei Betätigung des Auslösehebels 26 wird durch die Betätigungsstange 8 das Spreizelement 23 tiefer in die Konusausnehmung 38 des Trägerrings 39 hineingeschoben, wodurch sich der Trägerring 39 sowie das ihn umschließende ringartige Reibelement 24 radial erweitert werden. Dadurch wird das Reibelement 24 gegen die Innenwand der Teleskophülse 20 gepreßt. Damit wird die mit dem Kolben 2 und der Kolbenstange 5 verbundene Fortsatzstange 19 mit der Teleskophülse 20 gekoppelt. Durch Verschieben der Kolbenstange 5 kann nun der Betätigungszapfen 21 die Lose 37 bis zur Anlage an dem Ventilschieber 12 überwinden und den Ventilschieber 12 in seine Öffnungsposition verschieben, in der dann die Verbindung zwischen dem Anschlagraum 13 und den ersten Arbeitsraum 3 geöffnet ist.

Mittels Verfahren der Kolbenstange 5 und der damit gekoppelten Teleskophülse 20 wird nun der Anschlagkolben 10 in die gewünschte neue Endposition gebracht. Durch Zurückbewegen der Betätigungsstange 8 wird die Kopplung der Teleskophülse 20 von der Kolbenstange 5 gelöst, so daß die Teleskophülse 20 frei verschiebbar wird und die Feder 16 den Ventilschieber 12 wieder in seine Schließstellung verschieben kann. Dadurch wird die eingenommene Endposition des Anschlagkolbens 10 fixiert.

Um eine Öffnung des Schieberventils 11 zu vermeiden, wenn keine Öffnungsbetätigung durch die Betätigungsstange 8 vorliegt, ist an dem Kolben 2 eine die Teleskophülse 20 mit Abstand umschließende Abstandhülse 32 angeordnet, die bei nicht betätigter Betätigungsstange 8 und eingefahrener Kolbenstange 5 an dem Anschlagkolben 10 zur Anlage kommt, während die Teleskophülse 20 frei verschiebbar auf der Fortsatzstange 19 ist.

Bei den Ausführungsbeispielen der Figuren 1, 1a und 5, 5a besteht die Betätigungseinrichtung 9 aus einem radial zur Kolbenstange 5 sich erstreckenden Auslösehebel 26, der mit seinem einen Ende in eine sich quer zur Längserstreckung der Kolbenstange 5 gerichtete Ausnehmung 27 in einem Anschlußstück 33 der Kolbenstange 5 ragt und darin kippbar ist.

Das Kippen erfolgt durch manuelle Kraftbeaufschlagung des freien Endes des Auslösehebels 26 quer zu seiner Längserstreckung. Durch das Kippen wird die Betätigungsstange 8 in Öffnungsrichtung des Schieberventils 11 verschoben.

In Figur 3 ist an dem äußeren Ende der Kolbenstange 5 ein elektromechanischer Antrieb 28 angeordnet, durch den die Betätigungsstange 8 verschiebbar antreibbar ist.

In den Figuren 4 und 4a ist an dem äußeren Ende der Kolbenstange 5 ein Dehnstoffelement 29 angeordnet, dessen von dem Dehnstoff 31 bewegbar beaufschlagbarer Kolben, im vorliegenden Fall eine Membran 30 auf die Betätigungsstange 8 einwirkt und so die Betätigungsstange 8 verschiebbar antreibt. Durch den temperaturabhängig sein Volumen verändernden Dehnstoff 31 wird damit der Anschlagkolben 10 temperaturabhängig verstellt.

Es versteht sich, daß auch jede andere geeignete, an dem äußeren Ende der Kolbenstange 5 angeordnete Vorrichtung zum Verstellen der Betätigungsstange 8 verwendet werden kann.

### Bezugszeichenliste

- 1: Zylinder
- 2: Kolben
- 3: erste Arbeitsraum
- 4: zweite Arbeitsraum
- 5: Kolbenstange
- 6: Führungs- und Dichteinheit
- 7: Axialbohrung
- 8: Betätigungsstange
- 9: Betätigungseinrichtung
- 10: Anschlagkolben
- 11: Schieberventil
- 12: Ventilschieber
- 13: Anschlagraum
- 14: erster Verschluß
- 15: zweiter Verschluß
- 16: Feder
- 17: Schraubendruckfeder
- 18: Magnetring
- 19: Fortsatzstange
- 20: Teleskophülse
- 21: Betätigungszapfen
- 22: Durchgangsbohrung
- 23: Spreizelement
- 24: Reibelement
- 26: Auslösehebel
- 27: Ausnehmung
- 28: Antrieb
- 29: Dehnstoffelement
- 30: Membran
- 31: Dehnstoff
- 32: Abstandshülse
- 33: Anschlußstück
- 34: Kammer
- 35: Zapfenöffnung
- 36: radiale Erweiterung
- 37: Lose
- 38: Konusausnehmung
- 39: Trägerring

## Patentansprüche

1. Kolben-Zylinder Aggregat mit einem Zylinder (1), der mit einem *unter Druck stehenden Gas* gefüllt und dessen Zylinderinnenraum von einem axial in dem Zylinder (1) verschiebbaren Kolben (2) in einen ersten Arbeitsraum (3) und einen zweiten Arbeitsraum (4) unterteilt ist, mit einer am Kolben (2) angeordneten Kolbenstange (5), die durch den zweiten Arbeitsraum (4) hindurch und durch einen stirnseitigen zweiten Verschluß (15) an dem zweiten Ende des Zylinders (1) abgedichtet nach außen geführt ist, wobei der Einfahrhub von Kolben (2) und Kolbenstange (5) durch einen im Zylinder (1) angeordneten Anschlag begrenzt ist, an den der Kolben (2) direkt oder indirekt zur Anlage gelangt, wobei die axiale Position des Anschlags im Zylinder (1) mittels einer Verstelleinrichtung variierbar einstellbar ist, und *wobei der Anschlag ein abgedichtet in dem Zylinder (1) verschiebbar angeordneter Anschlagkolben (10) ist, der den ersten Arbeitsraum (3) von einem Anschlagraum (13) zwischen dem Anschlagkolben (10) und einem stirnseitigen ersten Verschluß (14) am ersten Ende des Zylinders (1) trennt,* wobei *in dem Anschlagkolben (10) eine Ventileinrichtung* mit einer Betätigungseinrichtung *angeordnet ist,*
**dadurch gekennzeichnet, daß** die Ventileinrichtung von der *Betätigungseinrichtung (9) aus einer Schließposition in eine den ersten Arbeitsraum (3) mit dem Anschlagraum (13) verbindende Offenposition verstellbar und in der Offenposition der Ventileinrichtung der Anschlagkolben dem Kolben nachführbar ist.*

2. Kolben-Zylinder Aggregat nach Anspruch *1*, **dadurch gekennzeichnet, daß** der Anschlagkolben (10) von einer vorgespannten Feder (17) zum Kolben (2) hin beaufschlagt ist.

3. Kolben-Zylinder Aggregat nach Anspruch *1*, **dadurch gekennzeichnet, daß** an dem Anschlagkolben (10) ein Magnet angeordnet ist, durch den bei an dem Anschlagkolben (10) anliegenden Kolben (2) der aus einem ferromagnetischen Werkstoff bestehende oder ein ferromagnetisches Teil aufweisende Kolben (2) durch das Magnetfeld des Magnets mit dem Anschlagkolben (10) kraftschlüssig gekoppelt ist.

4. Kolben-Zylinder Aggregat nach einem der *vorhergehenden* Ansprüche **dadurch gekennzeichnet, daß** die Ventileinrichtung ein von der Betätigungseinrichtung (9) axial bewegbares Schließglied aufweist.

5. Kolben-Zylinder Aggregat nach Anspruch *4*, **dadurch gekennzeichnet, daß** die Ventileinrichtung ein Schieberventil (11) mit einem Ventilschieber (12) oder ein Sitzventil mit einem Sitzschließglied ist, wobei der Ventilschieber (12) oder das Sitzschließglied von der Betätigungseinrichtung (9) aus der Schließposition in die Offenposition bewegbar ist,

6. Kolben-Zylinder Aggregat nach Anspruch *5,* **dadurch gekennzeichnet, daß** der Ventilschieber (12) oder das Sitzschließglied mittels einer axial von außen in das Innere des Zylinders (1) ragenden Betätigungsstange (8) aus der Schließposition in die Offenposition bewegbar ist.

7. Kolben-Zylinder Aggregat nach Anspruch *6*, **dadurch gekennzeichnet, daß** die Kolbenstange (5) eine durchgehende Axialbohrung (7) aufweist, in der die an ihrem äußeren Ende mit einer Betätigungskraft beaufschlagbare Betätigungsstange (8) abgedichtet axial bewegbar geführt ist.

8. Kolben-Zylinder Aggregat nach einem der Ansprüche *6* und *7,* **dadurch gekennzeichnet, daß** die Betätigungsstange (8) manuell an ihrem äußeren Ende mit einer Betätigungskraft beaufschlagbar ist.

9. Kolben-Zylinder Aggregat nach einem der Ansprüche *6* und *7,* **dadurch gekennzeichnet, daß** das äußere Ende der Betätigungsstange (8) an ihrem äußeren Ende von einem Dehnstoffkolben eines Dehnstoffelements (29) mit einer Betätigungskraft beaufschlagbar ist.

10. Kolben-Zylinder Aggregat nach einem der Ansprüche *6* bis *9,* **dadurch gekennzeichnet, daß** der Kolben (2) eine in den ersten Arbeitsraum (3) hineinragende Fortsatzstange (19) mit durchgehender koaxialer Durchgangsbohrung (22) aufweist, die von einer teleskopisch dazu verschiebbaren Teleskophülse (20) umschlossen ist, wobei die Teleskophülse (20) mit der Fortsatzstange (19) kraftschlüssig koppelbar ist wodurch durch das dem Anschlagkolben (10) zugewandte Ende der Teleskophülse (20) der Ventilschieber (12) oder das Sitzschließglied der Ventileinrichtung in dessen Öffnungsrichtung bewegbar beaufschlagbar ist.

11. Kolben-Zylinder Aggregat nach Anspruch *10*, **dadurch gekennzeichnet, daß** das freie Ende der aus der Fortsatzstange (19) in das Innere der Teleskophülse (20) ragenden Betätigungsstange (8) ein Spreizelement (23) aufweist, das in eine zentrische Öffnung eines ringartigen Reibelements (24) ragt, wobei bei Betätigung der Betätigungsstange (8) durch die Betätigungseinrichtung (9) das Reibelement (24) radial erweiterbar und gegen die Innenwand der Teleskophülse (20) preßbar ist.

12. Kolben-Zylinder Aggregat nach einem der Ansprüche 1 bis 5, **dadurch gekennzeichnet, daß** die Ventileinrichtung eine elektromagnetisch oder elektromechanisch betätigbare Ventileinrichtung ist.

13. Kolben-Zylinder Aggregat nach Anspruch 2, **dadurch gekennzeichnet, daß** die den Anschlagkolben (10) beaufschlagende vorgespannte Feder eine Schraubendruckfeder (17) ist, die mit ihrem einen Ende an dem stirnseitigen ersten Verschluß (14) am ersten Ende des Zylinders (1) und mit ihrem anderen Ende an dem Anschlagkolben (10) abgestützt ist.

## Claims

1. Piston-cylinder assembly having a cylinder (1) which is filled with a pressurized gas and whose cylinder interior is subdivided into a first working space (3) and a second working space (4) by a piston (2) which is axially displaceable in the cylinder (1), having a piston rod (5) which is arranged on the piston (2) and which is led through the second working space (4) and through an end-side second closure (15) at the second end of the cylinder (1) in a sealed-off manner to the outside, wherein the retraction stroke of piston (2) and piston rod (5) is limited by a stop which is arranged in the cylinder (1) and against which the piston (2) comes to bear directly or indirectly, wherein the axial position of the stop in the cylinder (1) is able to be set in a variable manner by means of an adjustment device, and wherein the stop is a stop piston (10) which is arranged so as to be displaceable in the cylinder (1) in a sealed-off manner and which separates the first working space (3) from a stop space (13) between the stop piston (10) and an end-side first closure (14) at the first end of the cylinder (1), wherein, in the stop piston (10), a valve device with an actuating device is arranged,
**characterized in that** the valve device is able to be adjusted by the actuating device (9) from a closed position into a open position, which connects the first working space (3) to the stop space (13), and, in the open position of the valve device, the stop piston is able to be made to track the piston.

2. Piston-cylinder assembly according to Claim 1,
**characterized in that** the stop piston (10) is acted on in the direction of the piston (2) by a pre-stressed spring (17).

3. Piston-cylinder assembly according to Claim 1,
**characterized in that**, on the stop piston (10), there is arranged a magnet by which, when the piston (2) bears against the stop piston (10), the piston (2), which consists of a ferromagnetic material or which has a ferromagnetic part, is coupled in a force-fitting manner to the stop piston (10) by way of the magnetic field of the magnet.

4. Piston-cylinder assembly according to one of the preceding claims, **characterized in that** the valve device has a closure element which is able to be moved axially by the actuating device (9).

5. Piston-cylinder assembly according to Claim 4,
**characterized in that** the valve device is a slide valve (11) with a valve slide (12), or a seat valve with a seat closure element, wherein the valve slide (12) or the seat closure element is able to be moved from the closed position into the open position by the actuating device (9).

6. Piston-cylinder assembly according to Claim 5,
**characterized in that** the valve slide (12) or the seat closure element is able to be moved from the closed position into the open position by means of an actuating rod (8) which projects axially from the outside into the interior of the cylinder (1).

7. Piston-cylinder assembly according to Claim 6,
**characterized in that** the piston rod (5) has a continuous axial bore (7) in which the actuating rod (8), which is able to be acted on at its free outer end with an actuation force, is guided so as to be axially movable in a sealed-off manner.

8. Piston-cylinder assembly according to either of Claims 6 and 7, **characterized in that** the actuating rod (8) is able to be acted on manually at its outer end with an actuation force.

9. Piston-cylinder assembly according to either of Claims 6 and 7, **characterized in that** the outer end of the actuating rod (8) is able to be acted on at its outer end with an actuating force by an expansion piston of an expansion element (29).

10. Piston-cylinder assembly according to one of Claims 6 to 9, **characterized in that** the piston (2) has an extension rod (19), projecting into the first working space (3), with a continuous coaxial through bore (22), which is surrounded by a telescopic sleeve (20) which is telescopically displaceable in relation thereto, wherein the telescopic sleeve (20) is able to be coupled to the extension rod (19) in a force-fitting manner, whereby, by way of that end of the telescopic sleeve (20) which faces the stop piston (10), the valve slide (12) or the seat closure element of the valve device is able to be acted on so at be movable in the opening direction thereof.

11. Piston-cylinder assembly according to Claim 10,
**characterized in that** the free end of the actuating rod (8), projecting from the extension rod (19) into the interior of the telescopic sleeve (20), has a spreading element (23) which projects into a central opening of a ring-like friction element (24), wherein, upon actuation of the actuating rod (8) by the actuating device (9), the friction element (24) is able to be widened radially and pressed against the inner wall of the telescopic sleeve (20).

12. Piston-cylinder assembly according to one of Claims 1 to 5, **characterized in that** the valve device is an electromagnetically or electromechanically actuable valve device.

13. Piston-cylinder assembly according to Claim 2,
**characterized in that** the pre-stressed spring which acts on the stop piston (10) is a helical compression spring (17) which is supported with one end against the end-side first closure (14) at the first end of the cylinder (1) and with the other end against the stop piston (10).

## Revendications

1. Ensemble cylindre-piston, comprenant un cylindre (1), qui est rempli avec un gaz sous pression et dont l'espace interne de cylindre est divisé par un piston (2) déplaçable axialement dans le cylindre (1) en un premier espace de travail (3) et un deuxième espace de travail (4), comprenant une tige de piston (5) disposée au niveau du piston (2), qui est guidée vers l'extérieur à travers le deuxième espace de travail (4) et de manière étanchéifiée par une deuxième fermeture frontale (15) au niveau de la deuxième extrémité du cylindre (1), la course de rétraction du piston (2) et de la tige de piston (5) étant limitée par une butée disposée dans le cylindre (1) contre laquelle le piston (2) parvient directement ou indirectement en appui, la position axiale de la butée dans le cylindre (1) pouvant être ajustée de manière variable au moyen d'un dispositif de réglage, et la butée étant un piston de butée (10) disposé de manière déplaçable et étanchéifiée dans le cylindre (1), qui sépare le premier espace de travail (3) d'un espace de butée (13) entre le piston de butée (10) et une première fermeture frontale (14) au niveau de la première extrémité du cylindre (1), un dispositif de soupape avec un dispositif d'actionnement étant disposé dans le piston de butée (10),
**caractérisé en ce que** le dispositif de soupape peut être déplacé par le dispositif d'actionnement (9) d'une position de fermeture dans une position d'ouverture reliant le premier espace de travail (3) à l'espace de butée (13) et dans la position d'ouverture du dispositif de soupape, le piston de butée peut être asservi au piston.

2. Ensemble cylindre-piston selon la revendication 1,
**caractérisé en ce que** le piston de butée (10) est sollicité vers le piston (2) par un ressort précontraint (17).

3. Ensemble cylindre-piston selon la revendication 1,
**caractérisé en ce qu'**un aimant est disposé au niveau du piston de butée (10), par le biais duquel, lorsque le piston (2) s'applique contre le piston de butée (10), le piston (2) constitué d'un matériau ferromagnétique ou présentant une partie ferromagnétique est accouplé par engagement par force par le champ magnétique de l'aimant au piston de butée (10).

4. Ensemble cylindre-piston selon l'une quelconque des revendications précédentes,, **caractérisé en ce que** le dispositif de soupape présente un organe de fermeture déplaçable axialement par le dispositif d'actionnement (9).

5. Ensemble cylindre-piston selon la revendication 4,
**caractérisé en ce que** le dispositif de soupape est un tiroir de soupape (11) avec un coulisseau de soupape (12) ou une soupape à siège avec un organe de fermeture de siège, le coulisseau de soupape (12) ou l'organe de fermeture de siège pouvant être déplacé de la position de fermeture dans la position d'ouverture par le dispositif d'actionnement (9).

6. Ensemble cylindre-piston selon la revendication 5,
**caractérisé en ce que** le coulisseau de soupape (12) ou l'organe de fermeture de siège peut être déplacé de la position de fermeture dans la position d'ouverture au moyen d'une tige d'actionnement (8) pénétrant axialement depuis l'extérieur à l'intérieur du cylindre (1).

7. Ensemble cylindre-piston selon la revendication 6,
**caractérisé en ce que** la tige de piston (5) présente un alésage axial traversant (7) dans lequel la tige d'actionnement (8) pouvant être sollicitée au niveau de son extrémité extérieure avec une force d'actionnement est guidée de manière déplaçable axialement et de manière étanchéifiée.

8. Ensemble cylindre-piston selon l'une quelconque des revendications 6 et 7, **caractérisé en ce que** la tige d'actionnement (8) peut être sollicitée manuellement au niveau de son extrémité extérieure avec une force d'actionnement.

9. Ensemble cylindre-piston selon l'une quelconque des revendications 6 et 7, **caractérisé en ce que** l'extrémité extérieure de la tige d'actionnement (8) peut être sollicitée avec une force d'actionnement au niveau de son extrémité extérieure par un piston en matériau expansible d'un élément en matériau expansible (29).

10. Ensemble cylindre-piston selon l'une quelconque des revendications 6 à 9, **caractérisé en ce que** le piston (2) présente une tige saillante (19) pénétrant dans le premier espace de travail (3), avec un alésage traversant coaxial continu (22) qui est entouré par une douille télescopique (20) pouvant être déplacée de manière télescopique par rapport à celui-ci, la douille télescopique (20) pouvant être accouplée à la tige saillante (19) par engagement par force, de sorte que le coulisseau de soupape (12) ous l'organe de fermeture de siège du dispositif de soupape puisse être sollicité de manière déplaçable dans sa direction d'ouverture par l'extrémité tournée vers le piston de butée (10) de la douille télescopique (20) .

11. Ensemble cylindre-piston selon la revendication 10, **caractérisé en ce que** l'extrémité libre de la tige d'actionnement (8) pénétrant à partir de la tige saillante (19) à l'intérieur de la douille télescopique (20) présente un élément d'écartement (23) qui pénètre dans une ouverture centrale d'un élément de friction annulaire (24), l'élément de friction (24) pouvant être élargi radialement lors de l'actionnement de la tige d'actionnement (8) par le dispositif d'actionnement (9) et pouvant être pressé contre la paroi intérieure de la douille télescopique (20).

12. Ensemble cylindre-piston selon l'une quelconque des revendications 1 à 5, **caractérisé en ce que** le dispositif de soupape est un dispositif de soupape à commande électromagnétique ou électromécanique.

13. Ensemble cylindre-piston selon la revendication 2,
**caractérisé en ce que** le ressort précontraint sollicitant le piston de butée (10) est un ressort de compression à boudin (17) qui est supporté par l'une de ses extrémités contre la première fermeture frontale (14) au niveau de la première extrémité du cylindre (1) et par son autre extrémité contre le piston de butée (10).
